# EUROPEAN PATENT SPECIFICATION

(11) **EP 2 041 219 B1**
(45) Date of publication and mention of the grant of the patent: **22.02.2012**
(21) Application number: 07796528.3
(22) Date of filing: 27.06.2007
(51) Int. Cl.: C08L 23/02, C08L 23/06, C08L 23/08, C08K 3/10, C08K 3/16, C08K 3/30, C08K 3/32, C08K 3/38, C08L 27/16, C08L 51/06, C08L 97/02

(54) **PROCESS AID FOR EXTRUDED WOOD COMPOSITES**
VERFAHRENSHILFE FÜR EXTRUDIERTE HOLZVERBUNDSTOFFE
AUXILLIAIRE DE MISE EN OEUVRE POUR COMPOSITES DE BOIS EXTRUDES

(30) Priority: 14.07.2006 US 830800 P; 12.06.2007 US 811739
(43) Date of publication of application: 01.04.2009
(73) Proprietor: DuPont Performance Elastomers L.L.C., Wilmington, DE 19809 (US)
(72) Inventor: ORIANI, Steven, Richard, Landenberg, Pennsylvania 19350 (US)
(74) Representative: Heinemann, Monica
(86) International application number: PCT/US2007/014974
(87) International publication number: WO 2008/008186

(56) References cited:
- JP-A- 56 095 946
- US-A- 3 125 547
- US-A1- 2004 254 268

## Description

### FIELD OF THE INVENTION

The present invention relates to extrusion of wood composites, i.e. compositions comprising a thermoplastic hydrocarbon host resin and wood flour, which further contain a processing aid comprising a fluoropolymer and a salt selected from the group consisting of potassium tetraborate, potassium pentaborate, potassium chloride, and the sodium, calcium or potassium salt of sulfate, pyrosulfate, persulfate, sulfite, phosphate, phosphite, and pyrophosphate.

### BACKGROUND OF THE INVENTION

Extruded wood composites are growing in popularity as an alternative to solid wood decking. The composite comprises a host resin and wood fiber (typically in a weight ratio between 60:40 and 35:65), and minor amounts of additives such as coupling agents, light stabilizers, colorants, and waxes. Most wood composites use a hydrocarbon host resin, such as LLDPE, HDPE, PP, or PS. Coupling agents are generally maleic anhydride grafted polyethylene.

One difficulty encountered in manufacturing extruded wood composites is excessive surface roughness on the extruded boards; hence the need for a process aid. Surface roughness is undesirable from an aesthetic viewpoint, but also affects durability of the wood composite. Exposed wood and surface voids permit moisture absorption into the composite, allowing the wood to rot.

There appear to be two sources of roughness in extruded wood composites: host resin melt fracture and drag of wood fiber on the extruder die surface, causing the fibers to peel upwards as the extrudate exits the die. For a given composition and extrusion process, the pressure in the extruder die provides a measure of the severity of both of these contributions to surface roughness. Low die pressures correlate with smoother extruded surfaces.

Due to the low thermal stability of wood fiber, it is desirable to find highly efficient means to decrease extruder die pressure without raising the melt temperature, while producing articles having smooth surfaces.

US-A-2004/254268 describes inter alia blends of polyolefin, wood flour, pigment, compatibilizer, fluoropolymer and slip agent (e.g. calcium stearate).
Said reference, however, fails to teach the specific salts used in accordance with the present invention.

JP-A-56095946 describes a phenolic resin composition containing graphite, teflon, wood flour and an inorganic filler (e.g. calcium carbonate) as additives. Said reference does not mention the specific salts of the present invention and uses the calcium carbonate salt as filler in a higher amount.

U.S. Patent No. 3,125,547 discloses that the use of 0.01-2.0 wt. % of a fluoropolymer that is in a fluid state at the processing temperature (e.g. a fluoroelastomer) will reduce die pressure in extrusions of both high and low density polyethylenes, as well as other polyolefins. Further, use of this additive allows significant increase in extrusion rates without melt fracture. The fluoropolymer forms a coating on the extruder die surface that results in improved processability.

### SUMMARY OF THE INVENTION

It has been surprisingly discovered that a processing aid comprising certain inorganic salts and fluoropolymer reduces the extrusion die pressure and improves the surface roughness of extruded, shaped wood composites.

Accordingly, one aspect of the present invention is an extrudable wood composite composition comprising:
A) hydrocarbon host resin and wood flour in a weight ratio between 70:30 and 30:70;
B) 0.02 to 2 weight percent, based on total weight of said extrudable composition, of a salt selected from the group consisting of potassium tetraborate, potassium pentaborate, potassium chloride, and the sodium, calcium or potassium salt of sulfate, pyrosulfate, persulfate, sulfite, phosphate, phosphite, and pyrophosphate; and
C) 100 to 2500 ppm, based on total weight of said extrudable composition, of a fluoropolymer.

### DETAILED DESCRIPTION OF THE INVENTION

The present invention is directed to means for improving the surface texture (i.e. reducing surface roughness) of extruded, shaped wood composites such as extruded composite boards and for reducing die pressure in the extrusion process of such compositions.

Extrudable compositions of this invention contain hydrocarbon host resin and wood flour in a weight ratio between 70:30 and 30:70. Preferably, the compositions contain between 40 and 60 weight percent wood flour, based on total weight of the composition.

Examples of hydrocarbon host resins that may be employed in the compositions of this invention include polyethylene (PE), polypropylene (PP) and polystyrene (PS). Such polymers are non-fluorinated. By the term "non-fluorinated" it is meant that the ratio of fluorine atoms to carbon atoms present in the polymer is less than 1:1, preferably 0:1. In general, hydrocarbon polymers also include any thermoplastic hydrocarbon polymer obtained by the homopolymerization or copolymerization of a monoolefin of the formula CH₂=CHR, where R is H or an alkyl radical, usually of not more than eight carbon atoms. In particular, this invention is applicable to polyethylene, of both high density and low density, for example, polyethylenes having a density within the range 0.85 to 0.97 g/cm³; polypropylene; polybutene-1; poly(3-methylbutene); poly(methylpentene); and copolymers of ethylene and alpha-olefins such as propylene, butene-1, hexene-1, octene-1, decene-1, and octadecene. Hydrocarbon polymers may also include vinyl aromatic polymers such as polystyrene. Blends of hydrocarbon polymers may also be used. Post consumer recycled polymer blends are also suitable host resins.

Extrudable compositions of this invention also contain wood flour. By wood flour is meant wood that has been shredded, ground, pulverized, or otherwise comminuted so that it can pass substantially through a 20 mesh (850 micron) screen. Many varieties of wood can be used to produce wood flour, and certain species are more suitable than others for specific applications. Load bearing composites such as extruded decking often contain hardwoods such as maple and oak, although other species may be blended in. Specific examples of wood flour include 40A3 and 4037 maple-oak wood flour from American Wood Fibers, and FO6 hardwood wood flour from PJ Murphy Forest Products Corp.

The extrudable compositions of the invention also contain 0.02 to 2 weight percent (preferably 0.1 to 1 weight percent) of an inorganic salt, based on total weight of the extrudable composition. The salt is selected from the group consisting of potassium tetraborate, potassium pentaborate, potassium chloride, and the sodium, calcium or potassium salt of sulfate, pyrosulfate, persulfate, sulfite, phosphate, phosphite, and pyrophosphate. Preferably, the salt is potassium sulfate, potassium pyrosulfate, potassium sulfite, potassium phosphate, potassium phosphite, or potassium pyrophosphate.

The compositions of this invention also comprise 100 to 2500 ppm (preferably 200 to 1000 ppm) fluoropolymer, based on total weight of the extrudable composition. Fluoropolymers useful in the compositions of this invention include elastomeric fluoropolymers (i.e. fluoroelastomers or amorphous fluoropolymers) and thermoplastic fluoropolymers (i.e. semicrystalline fluoropolymers). The fluoropolymers are comprised of copolymerized units of at least 15 (preferably at least 30, most preferably at least 50) weight percent vinylidene fluoride and at least one other fluorine-containing copolymerizable monomer. Percentages of copolymerized monomer units are based on the total weight of the fluoropolymer. Examples of suitable copolymerizable fluorine-containing monomers include, but are not limited to hexafluoropropylene, tetrafluoroethylene, chlorotrifluoroethylene, 2-hydro-pentafluoropropylene, 1-hydro-pentafluoropropylene and fluorovinyl ethers such as perfluoro(methyl vinyl ether). Fluoropolymers employed in this invention may also contain copolymerized units of hydrocarbon copolymerizable olefins such as ethylene or propylene. In some cases these copolymers may also include bromine-containing comonomers as taught in Apotheker and Krusic, U.S. Patent 4,035,565, or terminal iodo-groups, as taught in U.S. Patent 4,243,770. The latter patent also discloses the use of iodo group-containing fluoroolefin comonomers. Fluoroelastomers useful in this invention are fluoropolymers that are normally in the fluid state at room temperature and above, i.e. fluoropolymers which have T_{g} values below room temperature, and which exhibit little or no crystallinity at room temperature.

Specific examples of fluoropolymers that may be employed in the compositions of this invention include copolymers of i) vinylidene fluoride and hexafluoropropylene; ii) vinylidene fluoride, hexafluoropropylene and tetrafluoroethylene; iii) vinylidene fluoride, perfluoro(methyl vinyl ether) and tetrafluoroethylene; and iv) vinylidene fluoride, tetrafluoroethylene and propylene, wherein all of the copolymers contain at least 15 weight percent copolymerized units of vinylidene fluoride and at least 50 weight percent fluorine. Fluoroelastomers that are dipolymers of vinylidene fluoride and hexafluoropropylene; and fluoroplastics that are copolymers of vinylidene fluoride, hexafluoropropylene and, optionally, tetrafluoroethylene are preferred.

If a single fluoropolymer is employed in the compositions of this invention, the fluoropolymer must be substantially molten at the process temperature of the non-fluorinated host polymer. If a fluoropolymer blend is used, at least one of the blend components must meet this criterion.

If the fluoropolymer is a fluoroelastomer, preferably the Mooney viscosity, ML1 +10 at 121 °C (measured per ASTM D-1646), is greater than about 50. If the fluoropolymer is a fluoroplastic, preferably the melt index is less than 7.0 dg/min (measured at 265°C, 5 kg weight, per ASTM D-1238).

The extrudable compositions of this invention may also, optionally, contain other ingredients commonly contained in wood composites such as coupling agents (e.g., maleic anhydride containing polymers), waxes, lubricants, stearates, colorants, foaming agents, light stabilizers, fillers, etc.

In addition to inorganic salt and fluoropolymer, the process aid composition may optionally contain an interfacial agent as described in US 6,642,310. Preferred interfacial agents include polyethylene glycols and polycaprolactones.

Extrudable wood composite compositions of the invention may be prepared by a variety of processes such as those described in U.S. Patent Nos. 5,082,605; 5,088,910; and 5,746,958. In all cases, the host resin is melted so as to encapsulate the wood flour prior to the final shaping operation. The inorganic salt and fluoropolymer employed in this invention may be added to the host polymer/wood flour mixture at anytime prior to the final shaping step.

The compositions of the invention are particularly useful in extrusions of wood composites for end uses such as decking.

### EXAMPLES

The following examples illustrate the significant improvement in surface roughness of extruded wood composites when the process aid compositions described above are used in the extrudable compositions.

The materials employed in these examples were as follows:
Hydrocarbon host resin was 70/30 weight ratio blend of linear low density polyethylene (LLDPE) / low density polyethylene (LDPE). The LDPE was 640i grade from The Dow Chemical Co., with a melt index (190°C, 2160 g) of 1.0 dg/min. The LLDPE was LL1001.59 grade from ExxonMobil Chemical, also with a melt index of 1.0 dg/min (190°C, 2160 g). Wood flour was 40A3 (American Wood Products), maple-oak blend.

The coupling agent was Polybond® 3009 (Chemtura Corp.), maleic anhydride grafted polyethylene.

Fluoropolymer was Viton® AHV fluoroelastomer (DuPont Performance Elastomers L.L.C.).

### Examples 1-8 and Comparative Examples 1-7

All extrudable wood composite compositions contained a 50/50 weight ratio of host resin to wood flour and 0.5 wt.%, based on total weight of the extrudable composition, of maleic anhydride grafted polyethylene coupling agent. Other ingredients are shown in Table I.

Extrudable wood composite compositions were made by the following procedure. Wood flour was dried at 90°C in a desiccant dryer for at least 5 hours. Dried wood flour, host resin, coupling agent, and other ingredients were weighed out and tumble blended to create a 1300 g batch. The batch was then charged to a BR Banbury® mixer. After the mix had fluxed (noted by change in sound and amperage), the mixing was allowed to continue for 3 more minutes. Discharge temperatures of the batch were typically around 290°F. The resulting extrudable wood composite composition was then cooled, granulated, and dried again for at least 2 hours before extrusion testing.

Extrusion tests were conducted on a Brabender® Plasticorder using a ¾" single screw extruder operating at 62 rpm screw speed, feeding a slot die 25.4mm wide having a 1.52mm gap. The barrel and die temperature setpoints (°C) from the feed zone forward were: 160/170/180/190. The wood composite compound was fed to the extruder, and die pressure was recorded after 50 minutes of extrusion. Extrudate samples were collected at 10 minute intervals, and at 50 minutes the top and bottom surfaces of the extrudates were visually determined to be either completely rough, completely smooth, or a combination of rough and smooth streaks.

Results of tests using various process aid compositions are shown in Table I.

**Table I**

| Process aid | Comparative Examples | | | | | | | Examples | | | | | | | |
|---|---|---|---|---|---|---|---|---|---|---|---|---|---|---|---|
| ingredients (ppm) | CE-1 | CE-2 | CE-3 | CE-4 | CE-5 | CE-6 | CE-7 | E-1 | E-2 | E-3 | E-4 | E-5 | E-6 | E-7 | E-8 |
| NaCl | 0 | 0 | 3048 | 0 | 0 | 0 | 0 | 0 | 0 | 0 | 0 | 0 | 0 | 0 | 0 |
| KPF₆ | 0 | 0 | 0 | 3048 | 0 | 0 | 0 | 0 | 0 | 0 | 0 | 0 | 0 | 0 | 0 |
| ZnB₄O₇ | 0 | 0 | 0 | 0 | 3048 | 0 | 0 | 0 | 0 | 0 | 0 | 0 | 0 | 0 | 0 |
| Na₂B₄O₇ x 10H₂O | 0 | 0 | 0 | 0 | 0 | 3048 | 0 | 0 | 0 | 0 | 0 | 0 | 0 | 0 | 0 |
| CH₃CO₂K | 0 | 0 | 0 | 0 | 0 | 0 | 3048 | 0 | 0 | 0 | 0 | 0 | 0 | 0 | 0 |
| K₂B₄O₇ x 4H₂O | 0 | 0 | 0 | 0 | 0 | 0 | 0 | 3048 | 0 | 0 | 0 | 0 | 0 | 0 | 0 |
| CaSO₄ | 0 | 0 | 0 | 0 | 0 | 0 | 0 | 0 | 3048 | 0 | 0 | 0 | 0 | 0 | 0 |
| Na₃PO₄ | 0 | 0 | 0 | 0 | 0 | 0 | 0 | 0 | 0 | 3048 | 0 | 0 | 0 | 0 | 0 |
| KCl | 0 | 0 | 0 | 0 | 0 | 0 | 0 | 0 | 0 | 0 | 3048 | 0 | 0 | 0 | 0 |
| K₃PO₄ | 0 | 0 | 0 | 0 | 0 | 0 | 0 | 0 | 0 | 0 | 0 | 3048 | 0 | 0 | 0 |
| K₂S₂O₇ | 0 | 0 | 0 | 0 | 0 | 0 | 0 | 0 | 0 | 0 | 0 | 0 | 3048 | 0 | 0 |
| K₂SO₄ | 0 | 0 | 0 | 0 | 0 | 0 | 0 | 0 | 0 | 0 | 0 | 0 | 0 | 3048 | 0 |
| K₄P₂O₇ | 0 | 0 | 0 | 0 | 0 | 0 | 0 | 0 | 0 | 0 | 0 | 0 | 0 | 0 | 3048 |
| Fluoropolymer | 0 | 1524 | 1524 | 1524 | 1524 | 1524 | 1524 | 1524 | 1524 | 1524 | 1524 | 1524 | 1524 | 1524 | 1524 |
| Extrudate appearance* | R | R | R | R | RS | RS | RS | S | S | S | S | S | S | S | S |
| Die pressure (MPa) | 3.97 | 3.54 | 3.72 | 3.56 | 3.17 | 3.1 | 3.08 | 2.63 | 2.45 | 2.4 | 2.29 | 2.1 | 2.05 | 1.83 | 1.81 |

| | | | | | | | | | | | | | | | |
|---|---|---|---|---|---|---|---|---|---|---|---|---|---|---|---|
| * R = fully rough, RS = rough with some smooth streaks, S = completely smooth | | | | | | | | | | | | | | | |

## Claims

1. An extrudable wood composite composition comprising:
A) hydrocarbon host resin and wood flour in a weight ratio between 70:30 and 30:70;
B) 0.02 to 2 weight percent, based on total weight of said extrudable composition, of a salt selected from the group consisting of potassium tetraborate, potassium pentaborate, potassium chloride, and the sodium, calcium or potassium salt of sulfate, pyrosulfate, persulfate, sulfite, phosphate, phosphite, and pyrophosphate; and
C) 100 to 2500 ppm, based on total weight of said extrudable composition, of a fluoropolymer.

2. An extrudable composition of claim 1 wherein said salt is selected from the group consisting of potassium sulfate, potassium pyrosulfate, potassium sulfite, potassium phosphate, potassium phosphite, and potassium pyrophosphate.

3. An extrudable composition of claim 1 wherein said salt is present in an amount between 0.1 and 1 weight percent, based on total weight of said extrudable composition.

4. An extrudable composition of claim 1 wherein said fluoropolymer is present in an amount between 200 and 1000 ppm, based on total weight of said extrudable composition.

5. An extrudable composition of claim 1 wherein said fluoropolymer is a fluoroelastomer having a Mooney viscosity, ML1+10 at 121°C, measured per ASTM D1646, of greater than 50

6. An extrudable composition of claim 5 wherein said fluoroelastomer is a dipolymer of vinylidene fluoride and hexafluoropropylene.

7. An extrudable composition of claim 1 wherein said fluoropolymer is a fluoroplastic having a melt index, measured at 265°C, 5 kg weight, per ASTM D1238, of less than 7.0 dg/minute.

8. An extrudable composition of claim 7 wherein said fluoroplastic is selected from the group consisting of copolymerized units of i) vinylidene fluoride and hexafluoropropylene and ii) vinylidene fluoride, hexafluoropropylene and tetrafluoroethylene.

9. An extrudable composition of claim 1 wherein said hydrocarbon host resin comprises post consumer recycled polymer blend.

10. An extrudable composition of claim 1 wherein said composition contains between 40 and 60 weight percent wood flour, based on total weight of said composition.

## Patentansprüche

1. Extrudierbare Holzverbundstoffzusammensetzung umfassend:
A) Kohlenwasserstoff-Wirtsharz und Holzmehl in einem Gewichtsverhältnis zwischen 70:30 und 30:70;
B) 0,02 bis 2 Gewichtsprozent, auf das Gesamtgewicht der extrudierbaren Zusammensetzung bezogen, eines Salzes ausgewählt aus der Gruppe bestehend aus Kaliumtetraborat, Kaliumpentaborat, Kaliumchlorid und dem Natrium-, Calcium- oder Kaliumsalz des Sulfats, Pyrosulfats, Persulfats, Sulfits, Phosphats, Phosphits und Pyrophosphats; und
C) 100 bis 2500 ppm, auf das Gesamtgewicht der extrudierbaren Zusammensetzung bezogen, eines Fluorpolymers.

2. Extrudierbare Zusammensetzung nach Anspruch 1, wobei das Salz aus der Gruppe ausgewählt ist bestehend aus Kaliumsulfat, Kaliumpyrosulfat, Kaliumsulfit, Kaliumphosphat, Kaliumphosphit und Kaliumpyrophosphat.

3. Extrudierbare Zusammensetzung nach Anspruch 1, wobei das Salz in einer Menge zwischen 0,1 und 1 Gewichtsprozent, auf das Gesamtgewicht der extrudierbaren Zusammensetzung bezogen, vorliegt.

4. Extrudierbare Zusammensetzung nach Anspruch 1, wobei das Fluorpolymer in einer Menge zwischen 200 und 1000 ppm, auf das Gesamtgewicht der extrudierbaren Zusammensetzung bezogen, vorliegt.

5. Extrudierbare Zusammensetzung nach Anspruch 1, wobei das Fluorpolymer ein Fluorelastomer ist, das eine Mooney-Viskosität, ML1+10 bei 121 °C, ASTM D1646 gemäß gemessen, von mehr als 50 aufweist.

6. Extrudierbare Zusammensetzung nach Anspruch 5, wobei das Fluorelastomer ein Dipolymer von Vinylidenfluorid und Hexafluorpropylen ist.

7. Extrudierbare Zusammensetzung nach Anspruch 1, wobei das Fluorpolymer ein Fluorkunststoff ist, der einen Schmelzindex, bei 265 °C, einem Gewicht von 5 kg, ASTM D1238 gemäß gemessen, von weniger als 7,0 dg/Minute aufweist.

8. Extrudierbare Zusammensetzung nach Anspruch 7, wobei der Fluorkunststoff aus der Gruppe ausgewählt ist bestehend aus copolymerisierten Einheiten von i) Vinylidenfluorid und Hexafluorpropylen und ii) Vinylidenfluorid, Hexafluorpropylen und Tetrafluorethylen.

9. Extrudierbare Zusammensetzung nach Anspruch 1, wobei das Kohlenwasserstoff-Wirtsharz eine nach dem Verbraucher rezyklierte Polymermischung umfasst.

10. Extrudierbare Zusammensetzung nach Anspruch 1, wobei die Zusammensetzung 40 bis 60 Gewichtsprozent Holzmehl, auf das Gesamtgewicht der Zusammensetzung bezogen, enthält.

## Revendications

1. Composition de composite de bois extrudable comprenant:
A) une résine hôte hydrocarbure et une farine de bois dans un rapport en poids entre 70:30 et 30:70;
B) de 0,02 à 2 pour-cent en poids, sur la base du poids total de ladite composition extrudable, d'un sel choisi dans le groupe constitué de tétraborate de potassium, de pentaborate de potassium, de chlorure de potassium et du sel de sodium, de calcium ou de potassium de sulfate, de pyrosulfate, de persulfate, de sulfite, de phosphate, de phosphite et de pyrophosphate; et
C) de 100 à 2500 ppm, sur la base du poids total de ladite composition extrudable, d'un fluoropolymère.

2. Composition extrudable selon la revendication 1, dans laquelle ledit sel est choisi dans le groupe constitué de sulfate de potassium, de pyrosulfate de potassium, de sulfite de potassium, de phosphate de potassium, de phosphite de potassium et de pyrophosphate de potassium.

3. Composition extrudable selon la revendication 1, dans laquelle ledit sel est présent dans une quantité entre 0,1 et 1 pour-cent en poids, sur la base du poids total de ladite composition extrudable.

4. Composition extrudable selon la revendication 1, dans laquelle ledit fluoropolymère est présent dans une quantité entre 200 et 1000 ppm, sur la base du poids total de ladite composition extrudable.

5. Composition extrudable selon la revendication 1, dans laquelle ledit fluoropolymère est un fluoroélastomère possédant une viscosité Mooney, ML1+10 à 121°C, mesurée par la norme ASTM D1646, de plus de 50.

6. Composition extrudable selon la revendication 5, dans laquelle ledit fluoroélastomère est un dipolymère de fluorure de vinylidène et d'hexafluoropropylène.

7. Composition extrudable selon la revendication 1, dans laquelle ledit fluoropolymère est un fluoroplastique possédant un indice de fluidité, mesuré à 265°C, poids de 5 kg, selon la norme ASTM D1238, de moins de 7,0 dg/minute.

8. Composition extrudable selon la revendication 7, dans laquelle ledit fluoroplastique est choisi dans le groupe constitué d'unités copolymérisées i) de fluorure de vinylidène et d'hexafluoropropylène et ii) de fluorure de vinylidène, d'hexafluoropropylène et de tétrafluoroéthylène.

9. Composition extrudable selon la revendication 1, dans laquelle ladite résine hôte hydrocarbure comprend un mélange de polymères recyclés après consommation.

10. Composition extrudable selon la revendication 1, où ladite composition contient entre 40 et 60 pour-cent en poids de farine de bois, sur la base du poids total de ladite composition.
